# EUROPEAN PATENT SPECIFICATION

(11) **EP 3 217 345 B1**
(45) Date of publication and mention of the grant of the patent: **12.08.2020**
(21) Application number: 17163581.6
(22) Date of filing: 20.09.2012
(51) Int. Cl.: G06Q 30/02, G06Q 30/06, A47F 10/02, G09F 19/02

(54) **COMMODITY INTRODUCTION SYSTEM AND COMMODITY INTRODUCTION METHOD**
WARENEINFÜHRUNGSSYSTEM UND WARENEINFÜHRUNGSVERFAHREN
SYSTÈME ET PROCÉDÉ D'INTRODUCTION DE MARCHANDISES

(30) Priority: 20.09.2011 CN 201110279785; 21.06.2012 CN 201210206881
(43) Date of publication of application: 13.09.2017
(62) Divisional of application: 12833188.1
(73) Proprietor: Positec Power Tools (Suzhou) Co., Ltd, Suzhou, Jiangsu 215123 (CN)
(72) Inventor: ANDRIOLO, Paolo, I-36100 Vicenza (IT); BORINATO, Gianni, deceased (IT); CAPANNA, Roberto, I-36057 Arcugnano (IT)
(74) Representative: Dentons UK and Middle East LLP

(56) References cited:
- EP-A1- 2 175 407
- US-A1- 2007 150 331
- US-A1- 2008 186 179
- US-B2- 6 600 476
- DATABASE WPI Week 200623 Thomson Scientific, London, GB; AN 2006-217050 XP002770408, -& JP 2006 072177 A (PIONEER ELECTRONIC CORP) 16 March 2006 (2006-03-16)

## Description

### Field of the invention

The present invention relates to a commodity introduction system.

The present invention also relates to a commodity introduction method.

### Background of the invention

In real life, when a customer enters a store for shopping, the staff will accompany the consumer, in order to explain the product performance to the customer, or guide the consumer to buy commodities. However, most consumers are likely to learn about product information after entering the store, if the staff accompanies them, which will give consumers a sense of restraint virtually, affecting consumer's shopping mood. However, if the staff does not accompany the consumer, the customer can not get timely the answers when there is any problem on the commodity, bringing inconvenience for the shopping process of the customer.

US 2008/186179 A discloses an active marketing device for radio frequency identification (RFID). An exhibition device is disposed on an exhibition platform. A RFID tag on the exhibition device registers identification data corresponding to the exhibition device, and outputs a radio frequency signal corresponding to the identification data. A RFID reader detects movement of the exhibition device according to the radio frequency signal, reads the identification data of the RFID tag, and outputs device status information indicating the movement and the identification data of the exhibition device. A central processing unit obtains a device name, movement duration and movement frequency, and multimedia information corresponding to the exhibition device according to the device status information. A display device displays the multimedia information corresponding to the exhibition device.

US 2007/150331 A discloses merchandising and marketing data collection systems which collect data on shopper's interaction with merchandise samples, page store personnel, output promotional vouchers and use the merchandise samples to access information about the capabilities of the merchandise being sold.

EP 2175407 A discloses a commodity information display apparatus which includes a shelf on which a commodity is displayed, and a display unit for displaying the commodity information about the commodity. The commodity information about the commodity related to an RFID tag detected by an antenna and a read device is acquired in advance from a store computer and stored in a storage unit. When the commodity information is displayed, the information is acquired from the storage unit, and displayed on the display unit.

JP 2006 072177 A provides an image display apparatus which has improved operability by setting a moving track of a display member to a predetermined direction. The image display apparatus constitutes: a display having a display face for displaying an image; and a supporting member for supporting the display movably. The supporting member includes; a straight section arranged along a wall face, a straight section arranged along a ceiling, and a curved section which connects the straight sections together. The display is provided so that the display face is moved along the straight section and/or the curved section.

US 6,600,476 B discloses a video aid to assembly system and methods of using the system for providing production personnel access to manufacturing drawing information with minimum user intervention. The system scrolls manufacturing drawings automatically as a monitor is moved relative to a workpiece so that the manufacturing drawing corresponds with the identical location on the workpiece. The system also eliminates the need to store, retrieve, and maintain individual hardcopy drawings. In addition, the color capabilities of the system improve detailed part recognition and provide the ability to highlight items that require special attention. Moreover, mark-ups, such as build instructions or modifications, can be electronically overlaid on the drawing without modifying the original assembly drawing.

### Summary of the invention

The present invention provides a commodity introduction counter for introducing commodity information according to customer demands, and a commodity introduction method.

To achieve the above object, the present invention has the technical scheme that: a commodity introduction counter, comprising: a counter for placing commodities; a display disposed on the counter; a memorizer for storing video files introducing the commodities; an input device for inputting a signal indicating a specific commodity in the commodities; a moving device disposed between the display and the counter, wherein the display can be moved through the moving device to a position corresponding to the specific commodity, wherein the moving device comprises a guiding rail disposed on the counter and a moving member disposed on the display and matched with the guiding rail, the moving member being configured to move along the guiding rail; and a control device for receiving the signal, obtaining the specific video file corresponding to the specific commodity from the video files stored in the memorizer, and controlling the display to display the specific video file. The counter has an identity marker corresponding to the specific commodity, and the input device is a reading device disposed on the display to read the identity marker to form the signal. Preferably, the identity marker is a light reflective marker, and the reading device is a light sensor.

Preferably, the identity marker is a bar code corresponding to the specific commodity, and the reading device is a scanner.

Preferably, the identity marker is a light emitting element corresponding to the commodity, and the reading device is a photoelectric transmission element.

Preferably, the moving device comprises a guiding rail disposed on the counter and a roller disposed on the display.

Preferably, the counter comprises a support, and the support forms the guiding rail.

Preferably, the guiding rail is disposed on the surface of the counter for placing the commodity.

Preferably, the guiding rail extends along a straight line.

Preferably, the guiding rail extends along an arc line.

Preferably, the guiding rail is annular.

Preferably, the display comprises a handle operated to pull the display.

The present invention also provides a commodity introduction method of the commodity introduction counter, and the commodity introduction counter comprises: a display disposed on a counter, a memorizer for storing video files introducing the commodity, an input device for inputting a signal of one specific commodity of commodities, a control device and a moving device disposed between the display and the counter, wherein the display can be moved through the moving device to a position corresponding to the specific commodity, wherein the moving device comprises a guiding rail disposed on the counter and a moving member disposed on the display and matched with the guiding rail, the moving member being configured to move along the guiding rail; the commodity introduction method comprises the following steps: the input device inputs a signal indicating a specific commodity; the control device receives the signal, and obtains a specific video file corresponding to the specific commodity from the video files stored in the memorizer; the control device controls the display to display the specific video file, wherein the step of inputting a signal indicating one specific commodity also comprises the substeps that the display is moved to the position corresponding to the specific commodity, and wherein the counter is provided with an identity marker corresponding to the specific commodity, the input device comprises a reading device disposed on the display, the reading device reads the identity marker to form the signal.

Preferably, in the step of moving the display, the display is pulled through a handle disposed on the display.

Compared with the prior art, the commodity introduction counter and the commodity introduction method according to the invention have the advantages that the customer can learn about the information of the commodity focused, so that in the shopping process, the customer does not have to rely on the introduction of the staff, bringing convenience for shopping process of the customer.

The present disclosure also provides a commodity introduction counter for customers to learn about the information of the commodity.

Disclosed herein is a commodity introduction stand, comprising: an exhibition stand and a display device, wherein the exhibition stand has a countertop for placing the commodity, the commodity stand also comprises a supporting device for supporting the display device on the exhibition stand, the supporting device has at least one rotating axis forming an angle with the horizontal plane, and the display can rotate around the at least one rotating axis.

Preferably, the supporting device is in rotation connection with the exhibition stand, and has a first rotating axis vertical horizontal plane.

Preferably, the supporting device comprises a first supporting arm and a second supporting arm, and the first supporting arm is rotation connection with the second supporting arm, and has a second rotating axis vertical to the horizontal plane.

Preferably, the supporting device also comprises a third supporting arm, the third supporting arm is in rotation connection with the second supporting arm, and has a third rotating axis vertical to the horizontal plane.

Preferably, the display device is provided with a fixed block, and the fixed block is rotatably connected with the third supporting arm, and has a fourth rotation axis vertical to the third rotating axis.

Preferably, the countertop is square, and the supporting device is disposed at the middle position of any side of the square.

Preferably, the supporting device is disposed at the center position of the countertop.

Preferably, the display device is a tablet computer.

Preferably, the display device can play and introduce the video of the commodity of the exhibition stand.

Compared with the prior art, this commodity introduction stand disclosed herein has the advantages that the display can rotate around the rotating axis to adjust the direction facing to the display device, so that the customer can watch the video displayed by the display device through regulating the direction facing to the display device whichever the customer is at any position, and further, to learn about the commodity together with operating the commodity, therefore, the commodity introduction stand is very convenient for the customer to learn about the commodity.

The present disclosure also discloses a further commodity introduction system and a commodity introduction method.

Disclosed herein is a commodity introduction system, comprising: an exhibition stand for placing a commodity; a worktable for using by staff; wherein a client communication device disposed on the exhibition stand for using by a consumer, a service communication device disposed on the worktable for using by the staff, the client communication device can communicate with the service communication device, the staff can introduce the commodity placed on the exhibition stand to the consumer by the service communication device.

Preferably, the service communication device is a service computer, the client communication is a client compute, the commodity introducing comprises a internetworking device, the client communication device can communicate with the service communication device by the internetworking device.

Preferably, the client computer is operated to send a request for starting communication to the service computer, the service computer selectively receives the request.

Preferably, the service computer is correspond to at least one client computers, when the service computer is communicated with one of the client computers, other client computers wait for a response from the service computer according to the time order of the request from other client computers.

Preferably, the service computer comprises a microphone and a loudspeaker, the client computer comprises a microphone and a loudspeaker, and the staff can introduce the commodity to the consumer by voice.

Preferably, the service computer comprises a photographic device, the client computer comprises a photographic, and the staff can introduce the commodity to the consumer by voice and video.

Preferably, the commodity is divided into at least one commodity category, the client communication device is provided with a consulting option corresponding to the commodity category, each consulting option corresponds to one service communication device, one consulting option is selected by operating, and then the client communication device sends a communication request to the service communication device corresponding to the consulting option.

Also disclosed herein is a commodity introduction method, and the commodity introduction method comprises: a commodity introduction method, comprising: an exhibition stand for placing a commodity; a client communication device disposed on the exhibition stand for using by a consumer; a worktable for using by staff; a service communication device disposed on the worktable for using by the staff; the consumer sending a communication request to the service communication device by operating the client communication device; the service communication device receiving the communication request; the staff can introduce the commodity placed on the exhibition stand to the consumer.

Preferably, the commodity the same as those on the exhibition stand is placed on the worktable, the service communication comprises a photographic device, in the step of staff introducing the commodity to the consumer comprises a step of the staff showing the usage of the commodity.

Preferably, the service communication device corresponds to a plurality of client communication devices, in the step of sending the communication request from the client communication device, if the service communication device communicates with one client communication device, other client communication devices transmitting the communication request wait for the response from the service communication device according to the time order of the communication request.

Compared with the prior art, the further commodity introduction system and commodity introduction method disclosed herein have the advantages that the customer can feel relaxed after entering the store for shopping when walking and watching the commodity, without accompanying by the staff, so that the customer can conveniently communicate with the staff through the client computer when wanting to consult the commodity. Therefore, the commodity introduction system and method provide a sense of relaxed consumption environment for the customer, and can answer the consumers' questions timely, so as to bring consumers the convenience in the shopping process.

### Brief description of drawings

The present invention is further described combined with appended drawings and the embodiments. A number of further commodity introduction counters are disclosed herein.
Figure 1 is a schematic diagram of the commodity introduction counter in the first embodiment according to the present invention;
Figure 2 is a schematic block diagram of the commodity introduction counter shown in figure 1;
Figure 3 is a schematic diagram of the reading devices of the commodity introduction counter, wherein the reading devices are four light sensors;
Figure 4 is a schematic block diagram of a commodity introduction counter of the second disclosure herein;

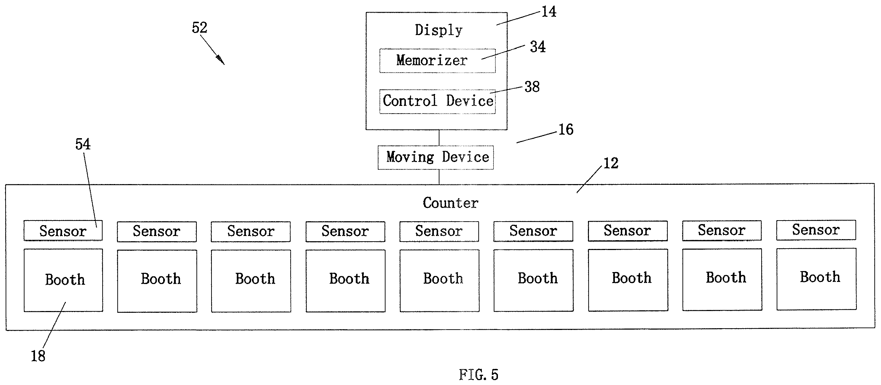

Figure 5 is a schematic block diagram of a commodity introduction counter of the third disclosure herein;
Figure 6 is a schematic block diagram of a commodity introduction counter of the fourth disclosure herein;
Figure 7 is a schematic block diagram of the commodity introduction counter of the fifth disclosure herein, which mainly shows the structure of one side of the exhibition stand, facing to the customer;
Figure 8 is a stereoscopic schematic of the commodity introduction counter shown in figure 7, which mainly shows the structure of one side of the commodity counter, facing to the customer;
Figure 9 is a stereoscopic schematic diagram of a commodity introduction counter of the sixth disclosure herein;
Figure 10 is a schematic diagram of a commodity introduction counter of the seventh disclosure herein.

### Description of preferred embodiments

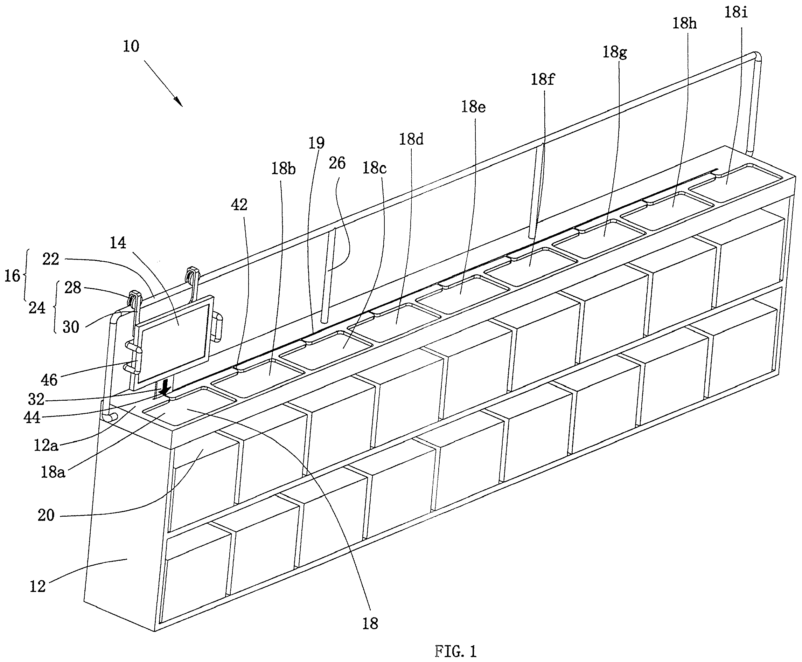

The figure 1 shows a commodity introduction counter 10 in the embodiment according to the present invention, the commodity introduction counter 10 comprises a counter 12 for exhibiting the commodity, a display 14 disposed on the counter 12, and a moving device 16 enabling the display 14 to move relative to the counter 12.

The counter 12 includes an upper surface 12 for supporting the commodity, and a row of booths 18 for placing the commodities are formed on the upper surfaces 12a. The number of the booths 18 can be 1, 2, 3, 4........, in the embodiment, the number of the booths 18 is 9, the booths 18 are the first booth 18a...... the ninth 18i, so that the commodity introduction counter 10 can exhibit nine commodities simultaneously.

A groove 19 is formed in the surface 12a of the countertop 12, so that the upper surface 12a can be matched with the display 14, to prevent the display 14 from titling, the specific principle is described below in detail. The extension direction of the groove 19 is the same as the arrangement direction of the booths 18.

A storage space 20 for storing commodities is formed under the upper surface 12a.

The display device 14 moves relative to the counter 12 through the moving device 16, so that the display 14 can move to the position corresponding to one booth 18, namely, the display 14 moves to the position corresponding to the commodity exhibited by the booth 18. The position of the display 14, corresponding to the position of the booth 18, is the position of the display 14, facing to the booth 18, at this time, the display 14 can correspondingly display the video introducing the commodity, so that the customer can more conveniently and comprehensively learn about the information of the commodity.

The moving device 16 comprises a guiding rail 22 disposed on the counter 12, and a moving member 24 disposed on the display 14 and matched with the guiding rail 22. The guiding rail 22 guides the display 14 in the moving process when supporting the display 14, namely, the moving member 24 moves along the guiding rail 22 to enable the display 14 to move.

In the embodiment, the counter 12 is provided with a support, the support is formed the guiding rail 22, a plurality of supporting rods 26 are disposed on the two ends and the middle of the support, so that the support can more stably and not easy to deform. The moving member 24 is a roller assembly disposed on the display 14, and the roller assembly 24 comprises a roller 28 rolling along the guiding rail 22 and a mounting member 30 for connecting the roller 28 on the display 14. The number of the roller assemblies 24 is at least 2, so that the display 14 is stably supported and hung on the guiding rail 22. Preferably, the number of the roller assemblies 24 is 2.

The moving device 16 is not limited to the above on structure, the guiding rail 22 can be formed on the upper surface 12a of the counter 12, correspondingly, the moving member can not also adopt the manner of roller assembly, a sliding surface can also be disposed on the mounting member 30, so that the guiding rail 22 can slide. The guiding rail 22 is formed on the support, at this time, the space of the counter 12 can not be basically occupied, so that the upper surface 12a of the counter 12 has more larger space for exhibiting the commodities, when the guiding rail 22 is disposed on the upper surface 12a of the counter 12, the display 14 can be supported more stably, especially, when the display 14 moves, the overall structure can be more stable.

Further, in the embodiment, the guiding rail 22 corresponds to the counter 12, so that the guiding rail 22 can extend along a straight line, the display 14 can move the position corresponding to the booth 18. In some cases, when the booths 18 are arranged in a circular arc, the guiding rail 22 can extend in an arc correspondingly, or when the booths 18 are arranged in a circumference, the guiding rail 22 can be arranged into a circular form correspondingly, so that the display 14 can always move to the position corresponding to the booths 18.

Of course, the skilled person in the art may make any modification design on the moving device 16 under the indication of the technical essences, but as long as its function and effects are the same as or similar to the present invention, it shall be covered within the scope of protection of the present invention range.

The display 14 can display the contents of the video files, and can be CRT (Cathode Ray Tube) display or a LCD (Liquid Crystal display). In the embodiment, the display 14 is the LCD, and is hung and supported on the guiding rail 22 through the moving member 24, a guide plate 32 is disposed on the one side of the display 14 which is close to the counter 12, to prevent the display 14 from swaying, to extend into the groove 19, so that when the display 14 is limited by the moving member 24 and the guide plate 32 when in moving, and further, the display 14 can move stably and reliably. More further, in order to improve the utilization of the space inside the guide plate 32, the guide plate 32 can adopt hollow arrangement, the power line of the display 14 is contained inside the guide plate 32, and is connected to a power interface from the inside of the counter 12, and due to the length of the power line of the display 14, the display 14 can be connected to the power interface when moving to any position.

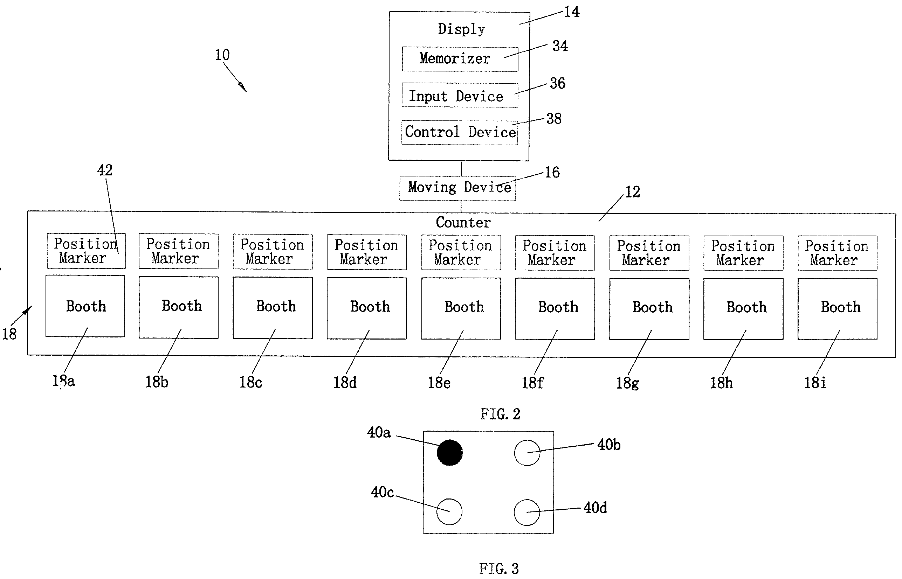

Referring to figures 1 and 2, the consumer can operate the display 14 to move one booth 18 or position corresponding to the commodity, to display the video corresponding to the commodity, in the process, the unique identity information indicating each commodity needs to specify, so that the display 14 can display the video of the commodity. Therefore, the commodity introduction counter 10 also comprises: a memorizer 34 storing the video files corresponding to the commodity and introducing the commodity, an input device 36 for inputting the signal indicating one of commodities, and a control device 38 for receiving the signal, obtaining the specific video file from the video files stored in the memorizer 34, and controlling the display 14 to display the video file.

The memorizer 34 is electrically connected with the control device 38. The video file corresponds to the commodity on the counter 12, namely, and the contents of the video file can be performance parameters of the commodity, use demonstration, etc. In the embodiment, for removing the memorizer 34, the memorizer 34 can be electrically connected to the control device 38 by the connection mode of USB (Universal Serial Bus) interface, so that the video file stored in the memorizer can be updated, and further, the commodity introduction counter 10 can very conveniently and fast introduce different commodities.

The customer can input the specific commodity specified by the input device 36, and inputs a signal indicating the specific commodity in the commodities, and the signal is provided to the control device 38, so that the control device 38 can control the specific video file corresponding to the display 14 correspondingly. In the embodiment, the input device 36 is a reading device disposed on the display device 14, correspondingly, identity markers are disposed on the positions of the booths 18 in the counter 12, and the reading device reads the identity markers to form the signal.

Further, in the embodiment, referring to figure 3, the reading device is a light sensor, and the identity marker is a light reflective marker. The number of the light sensors is at least 1, in the embodiment, the number of the light sensors is 4, the light sensors are the first light sensor 40a, the second light sensor 40b, the third light sensor 40c and the fourth light sensor 40d, the four light sensors are disposed on one side of the guide plate 32 facing to the commodity, the light reflective marker is disposed on the side wall of the groove 19 facing to the guide plate 32, the number and the positions of the light reflective marker corresponds to the number and positions of the booths 18. The light reflective markers are different in shape, so that each light reflective marker uniquely indicates one booth 18, namely, one commodity exhibited on the booth 18.

Certainly, the positions of the light sensors and the light reflective markers are not limited the above, the light reflective markers can be located in the counter 12, back to the surfaces of the upper surfaces 12a, and the light sensor is opposite to the light reflective marker.

The light sensor comprises a light emitter and a light receiver, when the light emitted by the light emitter is received by the light receiver, the light sensor transmits a signal to the control device 38, so that the four light sensors transmit a signal respectively or simultaneously transmit signals to correspond to different booths 18 (in figure 3, the light sensor in black indicates one transmitting a signal to the control device), conveniently corresponding to different commodities.

Because the light reflective markers are different in shape, when the four light sensors transmit different signals to the control device when facing to the light reflective markers, the signals are unique identity information indicating the booths 18 or the commodities, and at this time, the control device 38 can control the display 14 correspondingly to display the vide corresponding to the booths 18 or the commodities. The following table shows the corresponding relation between the identity information and the booths 18.

**Table I Corresponding Relation of Signals and Booths**

| | The first light sensor | The second light sensor | The third light sensor | The fourth light sensor |
|---|---|---|---|---|
| The first exhibition position | V | - | - | - |
| The second exhibition position | - | V | - | - |
| The third exhibition position | - | - | V | - |
| The fourth exhibition position | - | - | - | V |
| The fifth exhibition position | V | V | - | - |
| The sixth exhibition position | V | - | V | - |
| The seventh exhibition position | V | - | - | V |
| The eighth exhibition | V | V | V | - |
| position | | | | |
| The ninth exhibition position | V | V | - | V |
| Remark: "V" indicates that a signal is transmitted; "-" indicates that a signal is not transmitted. | | | | |

When the customer pulls the display 14 to change the booth 18 or the commodity corresponding to the display 14, the control device 38 controls the display 14 according to the change of the received signals, to correspondingly control the display to change the displayed video.

Certainly, the number of the light sensors is not limited to 4, which can be 3, 5 6, etc, too manly to mention here, the more the number is, the more the indicated commodities are, for example, in the embodiment, the four light sensors can identity fifteen commodities, namely, in the embodiment, the counter 12 can be provided with more six booths for increasing six commodities.

The control device 38 receives the signal, reads the specific video file corresponding to the signal from the memorizer 34, and controls the display 14 to display the contents of the specific video file. In the embodiment mode, the control device 38 is a circuit board with an electronic chip, and is mutually and electrically connected with the display 14, the memorizer 34 and the light sensors, so that the electronic chip can control to coordinate the work among electronic elements. For example, when the first sensor 40a and the second light sensor 40b simultaneously transmit the signals, the display 14 stays at the position corresponding to the fifth booth 18e, after receiving the second signal, the electronic chip can read the video corresponding to the commodity exhibited on the fifth booth 18e, and then controls the display 14 to display the contents in the video file.

When coming to the front of the commodity introduction counter 10, the customer can be interested in one of commodities after watching the commodities exhibited on the counter 12, this commodity is the specific commodity, the customer hopes to further learn about the information of the specific commodity, in some cases, the sales personnel are often busy, or not very familiar with the commodity, so the customer is often difficult in learning about enough information from the sales personnel. In the embodiment, when wanting to learn about the specific commodity, the customer can pull the display 14 to the position corresponding to the specific commodity, at this time, the display can display the video introducing the commodity and the video is the specific video. The contents of the specific video include commodity performance parameter information, applicable working condition information, use methods, user experience, etc, so that the commodities can be comprehensively introduced, the customer can easily comprehensively learn about the commodity, further, the customer can decide whether to purchase or not, and great convenience is brought to the customer.

In order that the customer to learn about the use method of the commodity introduction counter 10, after the display plays the specific video of the specific commodity, or plays it circularly for several times, or the display 14 stays at the original position for a preset time length, if the position of the display 14 is unchanged, the control 38 can control the display 14 to display the method of using the commodity introduction stand 10, and in the embodiment, the customer is reminded to pull the display 14 to the position corresponding to the commodity in which the customer is interested.

In order that the display is accurately located when the customer pulls the display 14 to enable the reading device to align to the identity marker, the positions of the counter 12, corresponding to the booths 18, are provided with position markers 42, and the guide plate 32 is provided with a position pointer 44. The customer pulls the display 14 to the position corresponding to one commodity 18, when the pointer 44 right points to the position marker 42 of the booth, the reading device right aligns to the identity marker, so that the display 14 can be accurately positioned, bringing convenience to the customer.

Certainly, in the embodiment, the reading device and the identity marker are not limited to the modes of the light sensors and the light reflective markers, correspondingly, the identity marker is a bar code disposed on the counter 12 corresponding to the commodity, and the reading device is a scanner. So, when the display 14 moves to the position corresponding to one booth 18, the scanner can read the information of the bar code to form the signal indicating the commodity, different bar codes are disposed for the booths, so that one bar code uniquely indicates one commodity, namely, the commodity exhibited on the booths 18. Correspondingly, the positions of the scanner and the bar code are not limited the above, if the bar code is disposed on the upper surface of the counter 12, the scanner is disposed on the display 14 and is opposite to the bar code, so that the scanner can read the bar code.

Similarly, the identity marker is a light-emitting element disposed on the counter 12 and corresponding to the commodity, and the reading device is a photoelectric transformation element. The number of the photoelectric transformation elements corresponds to the number of the booths 18, the positions of the counter 12, corresponding to the booths 18, are disposed with a light-emitting element respectively, the photoelectric sensing elements corresponding to the light-emitting elements are different, namely, when the light-emitting elements are disposed on the counter 12, corresponding to the booths 18, through the position change in the small scope, the display 14 moves the position corresponding to the booth 18, the photoelectric transformation elements corresponding to the light-emitting elements are different, so that corresponding to the booths 18, the photoelectric transmission elements generating electric signals are different, and each electric signal indicates one booth 18, namely, the commodity exhibited on the booth 18. Certainly, under the indication of the technical essence of the present invention, the skilled person in the art can make any modification, but as long as its functions and effect are the same or similar to the present invention, it should be covered in the scope of protection of the present invention.

In order that the customer pulls the display 14 conveniently, a handle 46 can be disposed on the display 14, bringing convenience for the customer.

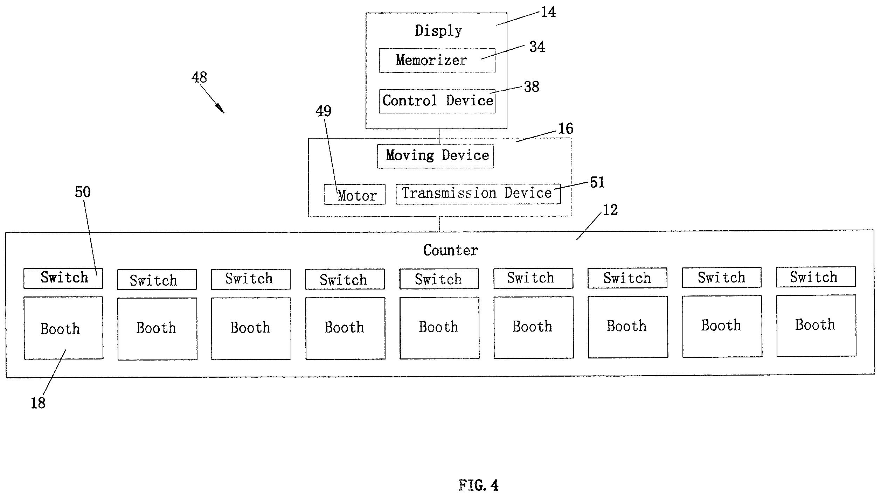

Referring to figure 4, a further commodity introduction counter 48 of the second disclosure is shown and is the same as to the commodity introduction counter 10 in the first embodiment in functional structure, and the difference is that: after the customer inputs the signal indicating the specific commodity through the input device 36, the display 14 can automatically move the position corresponding to the specific commodity, namely, the position corresponding to the booth of the specific commodity.

In the disclosure, the moving device also comprises a motor 49 disposed on the display 14 and a transmission device 51. The transmission device 51 comprises a gear driven by the motor 49 to rotate, and a rack disposed on the counter 12 and matched with the gear. Preferably, the motor 49 is a stepping motor, and is controlled by the control device 38, so that the position of the display 14 is controlled, namely, when the position corresponding to the signal received by the control 38 is different to the current position, the fixed turns of rotation of the stepped motor is controlled, so that the display 14 can move a preset distance, and the display 14 can move to the position corresponding to the received signal.

In order not to occupy the space of the upper surface of the counter 12, the rack is disposed in the counter 12, the motor is also positioned in the counter 12 and is fixedly connected with the guide plate 32, and when the motor rotates, the display 14 moves by driving the guide plate 32.

The input device is a switch 50 disposed on the counter 12, which can be a mechanical switch or a touch switch, and the number and positions of the switch 50 correspond to those of the booths 18.

The input device and the control device 38 can be connected through a wire, or signal transmission between the input device and the control device 38 is realized through wireless communication technology. In the disclosure, signal transmission between the input device and the control device 38 is realized through wireless communication technology, namely, a wireless data transmission module is disposed on the switch 50, and a wireless data receiving module is disposed on the control device 38. Correspondingly, when the switch 50 is triggered, its wireless data transmission module can transmit a signal uniquely indicating the switch 50, namely, the signal can uniquely indicate the specific commodity and its booth 18. For example, when the switch 50 corresponding to the second booth 18b is triggered, the wireless data transmission module of the switch 50 can transmit a number of 2 to the control device 38, the number 2 is the identity information indicating the signal, and the control device 38 reads the video file corresponding the number of 2 after receiving the number of 2, and then controls the display 14 to play the video file. At the same time, the control device 38 can control the moving device, so that the display 14 is in the position corresponding to the second booth 18b.

Certainly, the input device in the second disclosure is not limited to the above, and can have the reading device and the identity marker in the first embodiment, the reading device and the identity marker form the signal, and then the signal is transmitted to the control device 38 through the wire or the wireless data transmission module, namely, the reading device is disposed on the counter 12, the identity marker is disposed on the commodity, so that the identity marker of the commodity aligns to the reading device by operating by the customer, the reading device reads the identity marker to form the signal, and the wireless data transmission module disposed in the reading device transmits the signal to the control device.

Further, the input device can be replaced by a keyboard, the keyboard is provided with keys of which the number corresponds to the number of the booths 18, namely, each key corresponds to one booth, and the keyboard can transmit the signal to the control device 38 through the wire or the wireless communication technology. The number of the keyboards corresponds to the number of the booths 18, namely, each keyboard is disposed around each booth 18, so that the customer can learn about the information of a plurality of commodities for comparison, without walking, only by pressing corresponding keys, and the display 14 can display corresponding video, bringing convenience for the customer. Certainly, the number of the keyboard is 1, and can be disposed on the center position close to the upper surface of the counter 12, so as to reduce the manufacturing cost of the commodity introduction counter.

Referring to 5,a commodity introduction counter 52 of the third disclosure is shown and is the same as the commodity introduction counter 48 in the second disclosure, and the difference is that: the input device is a sensor disposed on the countertop, and is used for sensing at which commodity the customer stays, or the customer touches on the counter 12, namely, the commodity focused by the customer.

In the disclosure, the input device comprises at least one non-contact sensor 54 disposed on the counter 12, and the positions and the number of the non-contact sensors 54 corresponds to those of the commodities. In the disclosure, the counter 12 has nine booths 18 for exhibiting nine commodities, so the number of the non-contact sensors 54 is 9, corresponding to the number of the commodities.

The counter 12 has a side 12b with the same direction as the display 14, and the non-contact sensor 54 is disposed on the side 12b, so that when the customer stay at one booth 18 to watch the commodity, the non-contact sensor 54 can transmit a sensing signal, the sensing signal can uniquely indicate one booth, namely, the specific commodity on the booth 18 focused by the customer.

The input device can transmit the signal to the control device 38 through the wire or the wireless communication technology, so that the control device 38 can control the moving device 16 to enable the display 14 to move the position corresponding to the booth 18 indicated by the signal.

In the disclosure, the non-contact sensor 54 is an infrared sensor. The customer can browse the commodity information or take up one commodity to experience before purchasing after entering the store, at this time, the customer can stay at the front of one commodity, the infrared sensor can sense the customer and sends a sensing signal, further, after the control device 38 receives the signal, the moving device 16 is controlled to enable the display 14 to move the position corresponding to the specific commodity indicating by the signal, and control the display 14 to display the corresponding video.

In the disclosure, the non-contact sensor 54 is not limited to the infrared sensor, and can also be a sensor for sensing heat radiation, namely, the sensing signal is sent by heat radiation transmitted by sensing the body temperature of the customer to form the identity information.

Certainly, in order to avoid the condition that when the customer passes by the counter 12, the control device 38 continuously controls the moving device 16 to drive the display 14 to move, a delay function can be disposed in the input device or the control device 38, namely, by a mode of arranging a delay circuit or a counting circuit, the control 38 can correspondingly control the moving device 16 and the display 14 when one non-contact sensor 54 continuously sends the sensing signal for a preset time length, otherwise, the status quo is remained.

When several non-contact sensors 54 send sensing signals respectively, the control device 38 can correspondingly operate according to the time order of the production of the signal, namely, firstly, the video file corresponding to the produced signal is played, and when the video of the produced signal is played, the video corresponding to most easily produced signal is played again.

Further, the input device 36 is not limited to the non-contact sensor 54 disposed on the counter 12, and can also be a contact sensor. For example, the input device can be a pressure sensor, and the pressure sensor is disposed on the position for placing the commodity on the counter 12, namely, each pressure sensor is disposed on each booth 18. The commodities are placed on the booths 18, and the pressure sensor can produce a sensing signal which can uniquely indicate one booth or one commodity. After the commodities are placed on the booths 18, their gravity is unchanged, so when outer force with the gravity is applied on the commodities, the pressure sensed by the pressure sensor is unchanged, namely, and the produced sensing signal is unchanged. When the customer touches, pulls, presses or takes up the specific commodity when being interested in it, the pressure on the pressure sensor is changed, so that the produced sensing signal is also changed, the input device transmits the changed sensing signal to the control device 38, therefore realizing the public introduction on the specific commodity in which the customer is interested.

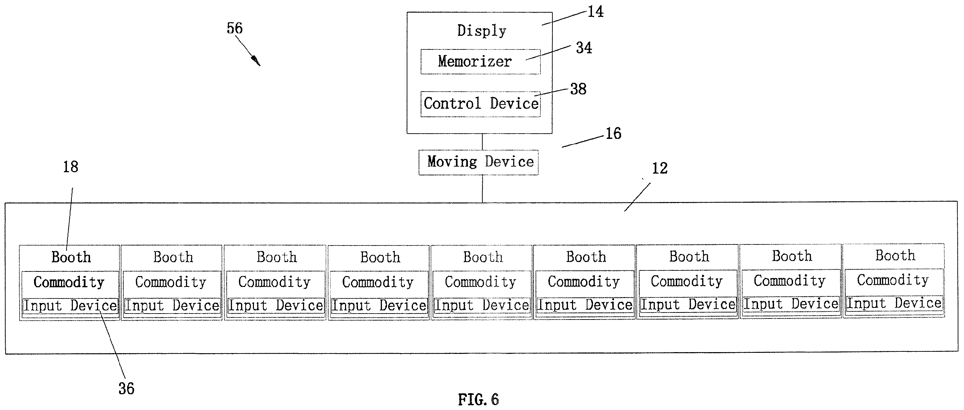

Referring to figure 6, a commodity counter 56 of the fourth disclosure is shown and is the same as the commodity counter in the above disclosure, and the difference is that: the input device 36 is disposed on the commodities exhibited on the counter 12, and the commodities are improved only for exhibition, or the input device 36 directly acted on the exhibited samples. The information transmission can be realized between the input device 36 and the control device 38 through the wire or the wireless communication technology, namely, the wire is disposed on the commodity to connect the control device 38, or a wireless data transmission module is disposed in the commodity to send the produced signal.

The input device 36 can also be the sensor disposed on the commodity, and the sensor can be a vibration sensor or a pressure sensor, so that the sensor can sensor the customer moves or holds the commodity, each sensor senses one commodity, the sensing signal sent can form the identity information indicating the commodity, so that the control device 38 can perform corresponding control. In the disclosure, the sensor is a vibration sensor, and is disposed in the commodity, when the customer touches the commodity, vibration can be caused and is sensed by the vibration sensor, and further, a sensing signal is sent to the control device 38.

For the scheme of arranging different sensors, the positions of the sensors on the commodities are different, when the sensors are vibration sensors, they can disposed on the commodities, when the sensors are pressure sensors, they are disposed on the holding parts of the commodities, so as to sense whether the commodities are held by the customer or not.

Certainly, the input device 36 can be a switch disposed on the commodity, and when the customer triggers the switch, the switch can send a signal uniquely indicating the commodity to the control device 38. The switch can be a mechanical switch or a contact switch.

The fourth disclosure provides a commodity introduction method, which uses the commodity introduction counter to exhibit the commodities. The method comprises the following steps that:
Step Al: the input device inputs a signal indicating one specific commodity. The customer inputs a signal indicating one specific commodity through the input device described in any one of the above embodiments and disclosures.
Step A3: The control device receives the signal, and obtains the specific video file corresponding to the specific commodity from the video files stored in the memorizer.

By programming setting, the control device can read the corresponding video file after receiving the signal.

Step A5: the control device controls the display device to display the specific vide file.

By the above commodity introduction method, the corresponding introduction is provided to the customer according to the specific commodity on which the customer focuses, bringing convenience for the shopping process of the customer.

Further, corresponding to the commodity introduction counter in the first embodiment, the step Al in the commodity introduction method also comprises the following substeps:
B 1: the display is moved to the position corresponding to the specific commodity.

The commodity is the specific commodity when the customer is interested in one commodity, the customer can operate to pull the handle of the display, so that the display reaches the position corresponding to the specific commodity, and at this time, the reading device of the commodity introduction counter is right opposite to the identity marker of the specific commodity.

Step B3: the reading device reads the identity marker to form the signal.

The reading device reads the identity marker opposite to it, to form a signal uniquely indicating the specific commodity, and sends it to the control device.

More further, corresponding to the moving devices in the second, the third and the fourth disclosures, the step Al in the commodity introduction method also comprises the following substeps that:
Step A4: the display can automatically move to the position corresponding to the specific commodity.

When the customer inputs the signal, the control device can control the moving device to enable to display to move to the position corresponding to the specific commodity indicated by the signal, so that the display can exhibit the video to the customer more specially.

More further, corresponding to the commodity introduction counter in the second or the fourth disclosure, the step Al in the commodity introduction method comprises the following step of: producing the signal indicating the specific commodity by triggering the switch disposed on the counter or the commodity.

The signal corresponding to the identity information of the commodity is input by triggering the switch disposed on the counter or the commodity.

Certainly, corresponding to the reading device disposed on the counter, the technical scheme of disposing the identity marker on the commodity, the step Al also can be replaced into:
The reading device reads the identity marker of the specific commodity by the reading device disposed on the counter to form the signal.

Further, corresponding to the commodity introduction counter in the third disclosure, the step Al in the commodity introduction method is that:
The non-contact sensor disposed on the counter and corresponding to the commodity senses whether there is a customer near the corresponding commodity, and if so, the corresponding commodity is the specific commodity, and the non-contact sensor forms the signal of the specific commodity.

When the customer focuses on one commodity, the commodity is the specific commodity, then, the customer walks near the specific commodity to observe carefully, and at this time, the non-contact sensor disposed on the counter senses the customer to send the sensing signal to form the signal indicating the specific commodity.

In order to avoid the case that the customer passes by the counter to enable the display to continuously move in the step, the input device also comprises a delay circuit, and when the non-contact sensor senses the customer for a preset time length, the input device outputs the identity information to the control device. Or when the control device continuously receives the identity information for a preset time length, the control device can read the video file corresponding to the commodity, and controls the display to display the contents of the video file.

Certainly, corresponding to the technical scheme of disposing the contact sensor on the counter, the step Al can be replaced into:
The contact sensor corresponding to the commodity is disposed on the counter to sense that the specific commodity is touched, pushed, pulled turned or taken up, to produce the signal indicating the specific commodity.

Further, corresponding to the commodity introduction counter in the fourth disclosure, the step Al of the commodity introduction method is that:
The customer operates the input device disposed on the commodity to input the identity information of the commodity.

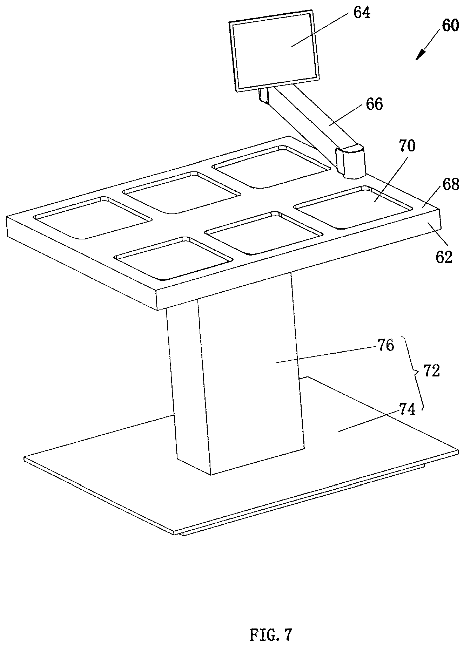

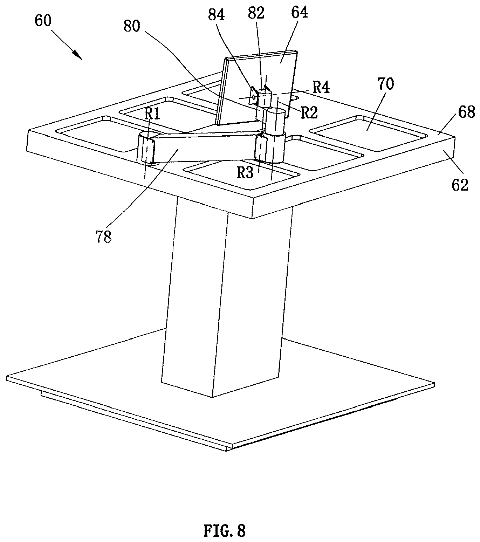

Referring to figures 7 and 8, the commodity introduction stand 60 in the fifth disclosure is used for introducing the commodities placed on the commodity introduction stand 60.

The commodity introduction stand 60 comprises an exhibition stand 62, a display device 64 for displaying and introducing the commodity information, and a supporting device 66 for supporting the display device 64 on the exhibition stand 62.

The exhibition stand 62 has a countertop 68 for placing the commodities, so that the customer can observe or touch the commodity intuitively. The countertop 68 can be square or round, and in the disclosure, the countertop 68 is square. In order to enable the commodities placed on the countertop 68 to be more orderly, the countertop 68 can be divided into a plurality of commodity placing areas 70, a preset number or preset styles of commodities are placed in each commodity placing area 70, convenient for the customer to understand or look for. In the disclosure, the countertop 68 is divided into six commodity placing areas 70, each commodity is placed in each commodity placing area respectively, so that the commodities on the countertop 68 are orderly, convenient for distinguishing by the customer.

The height between the countertop 68 and the ground can affect the convenience for the customer to understand or experience the commodity. When the commodities placed on the countertop 68 are small in volume, if the commodities are hand-held electric power tools, such as electric drill, electric hammer, screwdriver, electric circular saw, swaying cutter, etc., too many to mention here, the height of countertop 68 from the ground should be lightly higher, so that the customer can easily observe the commodity or operate and experience the commodity. For the exhibiting large commodities, such as hitting machine, lawn mower, blow-suck machine, etc, too may to mention here, the height of the countertop 68 from the ground should be lower, otherwise, the customer can not easily operate ad experience. Certainly, the commodities are not limited the above, which can be any other commodity, such as jewelry, mobile phone or camera, etc., too many to mention here.

In the disclosure, a base 72 is disposed under the countertop 68 to stably support the countertop 68. The base 72 comprises a supporting plate 74 and a mounting arm 76 disposed between the exhibition stand 62 and the supporting plate 74. The mounting arm 76 is connected with the center positions of the exhibition stand 62 and the supporting plate 74 respectively, further, the sectional area of the mounting arm 76 along the horizontal plane is smaller the sectional area of the exhibition stand 62 and the supporting plate 74 along the horizontal plane, so that the position between the exhibition stand 62 and the supporting plate 74, around the mounting arm 76, can be used for placing commodities, so as to save space.

The display device 64 can display and introduce the video of the commodities, so that the customer can learn about the commodity information of the display device 64. In the disclosure, the display device 64 is a tablet computer, the video file introducing the commodities is stored in the tablet computer, through software design, the screen of the display device 64 provides menus corresponding to the video file, further, the menus can indicate the corresponding commodities in picture or text, when the customer selects one menu, the display device 64 can play the video file corresponding to the menu to introduce the commodity to the customer.

A fixed block 84 is fixedly mounted on the display device 64, and is connected with the supporting device 66, so that the display device 64 can be stably supported on the countertop 68.

The supporting device 66 is used for supporting the display device 64 on the countertop 68, enabling the display device 64 to rotate relative to the countertop 68, so that the customer can watch the video, and operate and experience the commodity. In the disclosure, the supporting device 66 comprises a first supporting arm 78, a second supporting arm 80 and a third supporting arm 82 which are sequentially in rotation connection.

The supporting arm 78 and the exhibition stand 62 are in rotation connection to form a first rotating axis R1. In the disclosure, the first supporting arm 78 is connected with the middle position of one side of the square countertop 68, and has a first rotating axis R1 vertical to the horizontal plane, so that the customer can operate the display device 64 to rotate around the first rotating axis R1 relative to the countertop 68, to adjust the position of the display device 64, in this way, the customer can easily watch the video played by the display device 64 to conveniently learn about the commodity.

The supporting arm 78 extends relative to the exhibition stand 62 in an inclination manner, simultaneously, the first supporting arm 78 can prevent from interfering the commodities placed on the countertop 68 in space when rotating relative to the first rotating axis R1, so the commodity can be appropriately selected according to the distance between the first supporting arm 78 and the countertop 68. Further, the first supporting arm 78 can be set to rotate around the first rotating axis R1 and a fifth rotating axis parallel to the horizontal plane, so that the inclination angle of the first supporting arm 78 relative to the countertop 68 can be adjusted according to the commodities placed on the countertop 68.

The second supporting arm 80 and the first supporting arm 78 are in rotation connection to form a second rotating axis R2. In the disclosure, the second rotating axis R2 is vertical to the horizontal plane, the second supporting arm 80 and the first supporting arm 78 are in relative rotation, so that the display device 64 rotates around the second rotating axis R2 to adjust the direction of the display device 64, and further, the customers at different positions of the exhibition stand 62 can see the contents displayed by the display device 64.

The third supporting arm 82 and the fourth supporting arm 80 are in relative rotation to form a third rotating axis R3. Further, the third supporting arm 82 is connected with the fixed block 84 of the display device 64, so that the display device can be supported on the countertop 68 by the supporting device 66. In the disclosure, the third rotating axis R3 is vertical to the horizontal plane, the third supporting arm 82 and the second supporting arm 80 are in relative rotation, so that the display device can rotate around the third rotating axis R3, further, the third supporting arm 82 and the fixed block 84 are in rotation connection and has a fourth rotating axis R4 parallel to the horizontal plane, so that the display device 64 can rotate around the fourth rotating axis to flexibly adjust the direction of the display device 64, and further, the customer can conveniently watch the video played by the display device 64.

The projected lengths of the first supporting arm 78, the second supporting arm 80 and the third supporting 82 on the countertop are smaller than the length of any side of the countertop 68, so that the condition that the display device 64 always extends out of the countertop 68 to occupy the extra space can be avoided.

Certainly, the first rotating axis R1, the second rotating axis R2 and the third rotating axis R3 are not limited to those vertical to the horizontal plane, and can form an angle with the horizontal plane respectively, such as 70 degrees, 80 degrees, etc., the prefer scope of angle of inclination is 45 degrees to 90 degrees, preferably, 90 degrees.

When wanting to understand one commodity on the commodity introduction stand 10, the customer can hold the display device 64 to apply force on the display device 64, so that the third supporting arm 82 can rotate relative to the second supporting arm 80 to enable the display device 64 to face to the customer, if the customer further pulls the display device 64, the second supporting arm 80 can rotate relative to the first supporting arm 78 to drive the first supporting arm 78 to rotate relative to the exhibition stand 62, when the projections of the first supporting arm 78, the second supporting arm 80 and the third supporting arm 82 are in one straight line, the distance between the display device 64 and the customer is the closest, the customer can operate the display device 64 to play the video of commodity focused to further learn about the commodity by operating the placed commodity. Further, in the process of regulating the display device 64, the customer can enable the display device 64 to rotate round the fourth rotating axis R4 to adjust the direction of the display device 64, so that the customer can easily watch the video.

In the disclosure, because the display device 64 can rotate simultaneously around the first rotating axis R1, the second rotating axis R2, the third rotating axis R3 and the fourth rotating axis R4, the direction of the display device 64 can be adjusted randomly.

Certainly, the supporting device 66 is not limited to adopting the structure of the first supporting arm 78, the second supporting arm 80 and the third supporting arm 82, and can only comprises the first supporting arm 78, or the first supporting arm 78 and the second supporting arm 80.

In order to supply power to the display device 64 and avoid the power line to be exposed on the countertop 68 to affect the appearance, in the disclosure, the power line extends along the third supporting arm 82, the second supporting arm 80 and the first supporting arm 78, preferably, the power line is positioned in the third supporting arm 82, the second supporting arm 80 and the first supporting arm 78, and extends towards under the countertop 62 from the connection part of the first supporting arm 78 and the countertop 62 to be connected with an external power supply. The external power supply can be an alternating current power supply or a direct current power supply. The direct current power supply can be a battery pack.

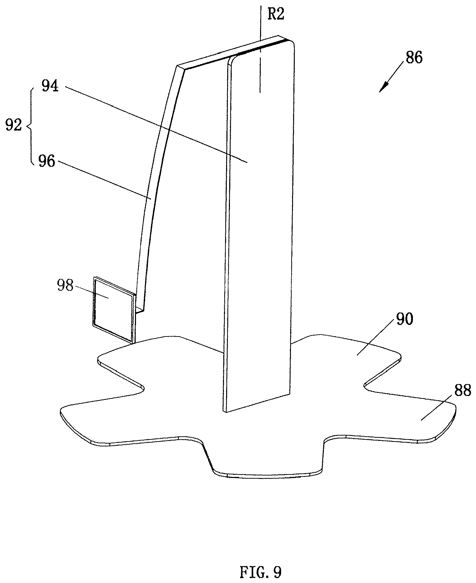

Figure 9 shows the commodity introduction stand 86 in the sixth disclosure. The commodity introduction stand 86 is basically identical to the commodity introduction stand 60 in the first embodiment in function and structure, and the difference is that: the commodity introduction stand 86 is used for placing larger commodities, and the commodities are placed on a countertop 90 of an exhibition stand 88. The exhibition stand 88 is placed on the ground directly without a support is disposed under the exhibition stand 88. Certainly, a supporting facility can also be disposed under the exhibition stand 88 to adjust the distance from the ground, and under the specific condition, it can be set according to the volume of the to-be-placed commodities.

The supporting device 92 comprises a first supporting arm 94 fixedly disposed relative to the exhibition stand 90, and a second supporting arm 96 in rotation connection with the first supporting arm 94.

In the disclosure, the first supporting arm 94 extends along the direction vertical to the horizontal plane, the side of the first supporting arm 94 is rectangular, and is provided with a trademark of the commodities, to realize the purpose of brand publicity. The first supporting arm 94 is fixedly mounted at the center position of the countertop 90, so that the supporting device 92 can be firmly combined with the exhibition stand 88.

In the disclosure, the top end of the second supporting arm 96 and the top end of the first supporting arm 94 are in rotation connection to form a second rotating axis R2, so that the second supporting arm 96 can rotate relative to the first supporting arm 94 and the exhibition stand 88. The end of the second supporting arm 96, far away from the first supporting arm 94, is connected with the display device 98, so that the display device 98 can rotate around the first supporting arm together with the second supporting arm 96. Further, the customer can rotate the display device 98 to the commodity focused, so as to operate and experience the commodity while watching the video introduction, and the customer can easily understand the commodity to have better shopping experience.

Compared with the prior art, this disclosed commodity introduction stand has the advantages that the display device rotates around the rotating axes to adjust the facing direction of the display device, so that the customer can watch the video displayed by the display device by regulating the facing direction of the display device at any position, further to operate the commodity to further understand it, so the commodity introduction stand is very convenient to understand by the customer.

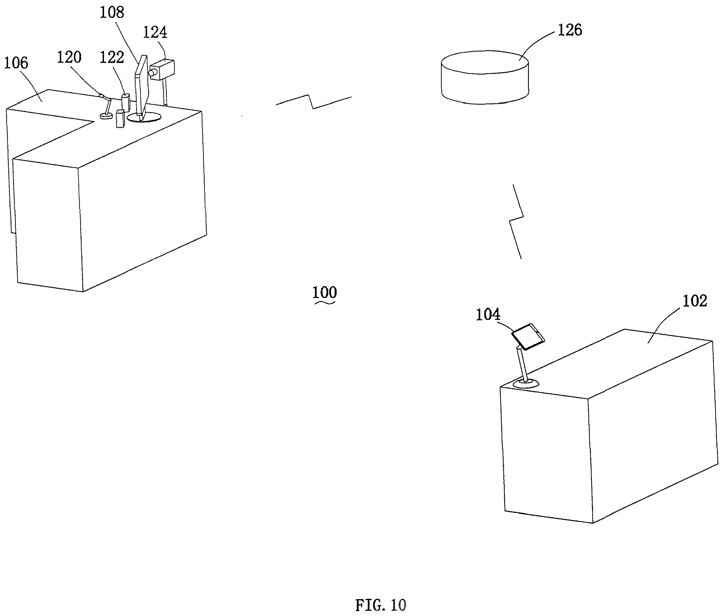

The figure 10 shows the commodity introduction system 100 of the seventh disclosure, the commodity introduction system 100 comprises an exhibition stand 102 for placing commodities, a client communication device 104 for using by the customer, a worktable 106 for using by staff, and a service communication device 108 disposed on the worktable 106 and used by the staff. The client communication 104 can communicate with the service communication device 108, so that the staff can introduce the commodities placed on the exhibition stand 102 through the service communication device 108.

The exhibition stand 102 is provided with a commodity exhibition surface for placing commodities, and the commodities can be placed on the commodities on the commodity exhibition surface orderly or disorderly. The commodities are any objects for daily life and purchased in the stored. And in the disclosure, the commodities are electric power tools.

The client communication device 104 is disposed on the exhibition stand 102, the customer can communicate with the staff on the worktable 106 through the client communication device 104, so that the customer can inquiry the information related to the commodity.

The client communication device 104 can be a computer or a mobile phone. In the disclosure, the client communication device 104 is the client computer 104. The client computer 104 is a desktop computer, a laptop computer or a tablet computer, and preferably, the client computer 104 is the tablet computer. The client computer 104 is provided with a microphone and a speaker, so that the customer can make voice conversations with the staff. Further, the client computer 104 is also provided with a photographic device, so that the staff can see the status of the customer, for example, the customer takes up one commodity to observe, to avoid the condition that the commodity introduced by the staff is not that one in which the customer is not interested.

The client communication device 104 can be operated to send a communication request to the service communication device 108, so that the client communication device 104 does not communicate with the service communication device 108 when the customer does not need to consult the staff. In the disclosure, when the customer can operate the client computer 104 to send the communication request when needing to ask questions, for example, the client computer 104 displays one option, and the user touches the option to prompt the client computer 104 to send the communication request.

The microphone, the speaker and the photographic device are separated from the client computer 104, and are electrically connected with the client computer 104 respectively through wires. Certainly, the microphone, the speaker and the photographic device can be integrated in the client computer 104. In the disclosure, the microphone, the speaker and the photographic device can be integrated in the client computer 104, so that the exhibition stand 102 has more space for placing the commodities.

The worktable 106 is used for the staff, the commodities the same as those on the exhibition stand 102 are placed on the worktable 106, so that the staff can take up the object to explain and demonstrate when introducing the commodities, and the customer can more comprehensively understand the commodity.

The service communication device 108 is disposed on the worktable 106, and the staff communicates with the customer by operating the service communication device 108, to explain and demonstrate the commodity or answer the questions of the customer. The service communication device 108 can be a computer or a mobile phone. In the disclosure, the service communication device 108 is a service computer 108, and the service computer 108 is a desktop computer, the laptop computer or a tablet computer. Preferably, the service computer 108 is the desktop computer. The service computer 108 is provided with a microphone 120 and a speaker 122, so that the staff can make voice conversations with the customer. Further, the service computer 108 is also provided with a photographic device 124, so that the staff can be in face-to-face communication even if they are in different special positions, and the staff can specially introduce or demonstrate the product, aiming at the questions of the customer.

The service communication device 108 can selectively receive the communication request sent from the client communication device 104, so that the staff can refuse to receive the communication request when in busy. In the disclosure, after the service computer 108 receives the communication request, the display of service computer 108 can display a button for receiving or refusing the communication request, the staff operates the service computer 108 to click the receiving button or the refusing button to receive or refuse the communication request correspondingly.

Certainly, the client communication device 104 and the service communication device 108 are not limited to the computer or mobile phone, and can be interphones.

The corresponding service communication device 108 and the client communication device 104 are computers, and the commodity introduction system 100 also comprises network interconnection equipment 126. The client communication computer 18 communicates with the client computer 104 through the network interconnection equipment 126. The network interconnection equipment 126 can be a router, an exchanger or a concentrator. In the disclosure, the network interconnection equipment 126 is the router. The communication between the service computer 108 and the client computer 104 can be wired network communication or wireless network communication. In the disclosure, the network interconnection 126 is the wireless router, so that the network interconnection equipment 126 does not needed for the network connection between the service computer 108 and the client computer 104, and the client computer 104 can conveniently move onto different exhibition stands 102.

Communication software is disposed on the service computer 108 and the client computer 104, so that the communication between the staff and the customer can be realized, and the communication software can be Facetime, Tencent QQ, Skype or MSN, etc. In the disclosure, the communication between the staff and the customer is realized by the Facetime Software.

The mode of communication between the service computer 108 and the service computer 104 is not limited to the mode of audio video, and can adopt the mode of text conversation, so that the deaf and dumb can conveniently ask questions. Certainly, the communication between the service computer 108 and the client computer 104 can be set to the mode of text conversation, so that the customer and the staff can communicate with each other only through text, it is not necessary to dispose the photographic device, the microphone, the speaker, etc. on the service computer 108 and the client computer 104, saving the costs.

When a plurality of exhibition stands 102 are disposed in a store, the client computers 104 on the exhibition stands 102 can correspond to one service computer 108, and a plurality of service computers 108 can be disposed. In the disclosure, the commodities are divided into at least one classification, the client computer 104 has a consulting option corresponding to at least one commodity category, each consulting option corresponds to one service computer 108, one consulting option can be operationally selected, the client computer 104 sends a communication request to the service computer 108 corresponding to the consulting option. After the corresponding service computer 108 receives the communication request, the customer can make conversation with the staff, so that the customer can learn about more professional information, which has an important guiding function on shopping of the customer, bringing convenience for the customer. In the examples of the disclosure, for example, if there are 10 exhibition stands, and 50 kinds of commodities which can be divided into five classifications, only five service computers 108 are disposed, and each corresponds to one commodity classification, so that the costs of the stores can be saved, and the consulting requirements of the customer can be met. Further, because a plurality of client computers 104 correspond to one service computer 108, the information of the commodities can be introduced to the customer timely, meanwhile, the number of the staff can be reduced, the cost on training the more staff on the product is saved, and the professional service is provided to the customer.

The commodity introduction method in this disclosure is used for introducing the information of the commodities, which comprises the following steps that:
Step Al: an exhibition stand 102 for placing the commodities is disposed, a client communication device 104 for using by staff is disposed on the exhibition stand 102, a worktable 106 is disposed, and a service communication device 108 for using by the staff is disposed on the worktable 106.

In the disclosure, the exhibition stand 102 is disposed in the store, the commodities are placed on the exhibition stand 102, a client computer 104 is disposed on the exhibition stand 102, the customer will observe the commodities on the exhibition stand 102 after entering the store, and because no staff accompany the customer, the customer can have a relaxed shopping environment. A worktable 106 is disposed in one non-shopping area or an independent room, a service computer 108 is disposed on the worktable 106, so that the working area of the staff can be relatively separated from the customer, and further, the staff and the customer can not interfere with each other.

Step A5: the customer operates the client communication device 104 to send a communication request to the service communication device 108.

In the disclosure, the customer is interested in one commodity and wants to learn more about it's performance after observing the commodities, or the customer needs some shopping guidance, for example, when the customer only has some use demands and does not know which commodity to buy, they can consult the staff, and the client computer 104 can send a communication request to the service computer 108.

Step A7: the service communication device 108 receives the communication request.

In the disclosure, after the staff finds the communication request, the service computer 108 is operated to receive the communication request, and at this time, the customer can begin to communicate with the staff, for example, the customer can communicate with the staff in the mode of text conversation.

Step All: the staff introduces the commodities placed on the exhibition stand 102.

In the disclosure, according to the demands of the customer, the staff introduces the commodities to the customer, for example, the customer wants to learn about the performance or quality of the commodity, or the customer tells the use demands to the staff, etc., the staff introduces the information of the commodities on the exhibition stands 102 or recommends the customer to buy corresponding commodities according to the use demands of the customer.

Wherein, step All also comprises a method for the staff to demonstrate the use method of the commodity through the service communication device 108.

In the disclosure, the staff demonstrates the use method of the commodities in introducing the commodity, so that the customer can more comprehensively learn about the commodities, the photographic device 26 of the service computer 108 can shoot the video of demonstration process of the staff, and pass the video to the client computer through the communication connection between the service computer 108 and the client computer 104, so that the customer can watch the demonstration process of the staff through the client computer 104.

Wherein, the service communication device 108 corresponds to a plurality of client communication devices 104, in the step A7, if the service communication services 108 communicates with one client communication device 104, other client communication devices 104 sending the communication request to the service communication device 108 wait for response from the service communication device 108 according to time order of communication request. Further, the client communication devices 104 in waiting can remind the customer of the communication waiting.

In the disclosure, when the service computer 108 corresponds to a plurality of client computers 104, because under some cases, different customers are interested in different commodities or have different questions, the staff can not answer the questions of the customers simultaneously, if the service computer 108 simultaneously communicates with the client computers 104 sending the communication requests, the staff can not answer the questions of the customers to cause disorder, so the one service computer 108 is selected to communicate with one client computer 104, other client computers 104 sending the communication request can wait for the response from the service computer 108 according to the time order of communication request. Alternatively, the service computer 108 can communicate with a plurality of client computers 104, when the staff explains aiming at the question of one customer, other customers can receive the explanation from the staff, convenient to help the customers to learn about more information from different aspects.

Compared with the prior art, the disclosed commodity introduction system and the commodity introduction method have the advantages that after the customer enters the store to go shopping, no staff are needed for accompanying the customer, so that the customer feels relaxed when waking and observing the commodities, the customer can communicate with the staff through the client computer when wanting to inquiry one commodity. Therefore, the disclosed commodity introduction system and the commodity introduction method provide the relaxed consumption environment to the customer, and can answer the questions of the customer, bringing convenience for the shopping process of the customer.

Also disclosed herein is a commodity introduction system, comprising:
an exhibition stand for placing a commodity;
a worktable for using by staff;
wherein a client communication device disposed on the exhibition stand for using by a consumer, a service communication device disposed on the worktable for using by the staff, the client communication device can communicate with the service communication device, the staff can introduce the commodity placed on the exhibition stand to the consumer by the service communication device.

Preferably the service communication device is a service computer, the client communication is a client compute, the commodity introducing comprises a internetworking device, the client communication device can communicate with the service communication device by the internetworking device.

Particularly preferably the client computer is operated to send a request for starting communication to the service computer, the service computer selectively receives the request.

More preferably the service computer is correspond to at least one client computers, when the service computer is communicated with one of the client computers, other client computers transmitting the communication request wait for the response from the service computer according to the time order of the other client computers.

Alternatively particularly preferably the service computer comprises a microphone and a loudspeaker, the client computer comprises a microphone and a loudspeaker, and the staff can introduce the commodity to the consumer by voice.

More preferably the service computer comprises a photographic device, the client computer comprises a photographic, and the staff can introduce the commodity to the consumer by voice and video.

Preferably the commodity is divided into at least one commodity category, the client communication device comprises a consulting option for corresponding to the commodity category, each consulting option is corresponding to one service communication device, one consulting option is selected by operating, and the client communication device sends a request for starting communication to the service communication device corresponding to the consulting option.

Further disclosed herein is a commodity introduction method, comprising:
an exhibition stand for placing a commodity;
a client communication device disposed on the exhibition stand for using by a consumer; a worktable for using by staff; a service communication device disposed on the worktable for using by the staff;
the consumer sending a communication request to the service communication device by operating the client communication device;
the service communication device receiving the communication request; the staff can introduce the commodity placed on the exhibition stand to the consumer

Preferably the commodity the same as those on the exhibition stand is placed on the worktable, the service communication comprises a photographic device, in the step of staff introducing the commodity to the consumer comprises a step of the staff showing the usage of the commodity.

Preferably the service communication device corresponds to a plurality of client communication devices, in the step of sending the communication request
from the client communication device, if the service communication device communicates with one client communication device, other client communication devices transmitting the communication request wait for the response from the service communication device according to the time order of the communication request.

## Claims

1. A commodity introduction counter (10) comprising:
a counter (12) for placing commodities;
a display (14) disposed on the counter (12);
a memorizer (34) for storing video files introducing the commodities;
an input device (36) for inputting a signal indicating a specific commodity in the commodities;
a moving device (16) disposed between the display (14) and the counter (12), wherein the display (14) can be moved through the moving device (16) to a position corresponding to the specific commodity, wherein the moving device (16) comprises a guiding rail (22) disposed on the counter (12) and a moving member (24) disposed on the display (14) and matched with the guiding rail (22), the moving member (24) being configured to move along the guiding rail (22); and
a control device (38) for receiving the signal, obtaining the specific video file corresponding to the specific commodity from the video files stored in the memorizer (34), and controlling the display (14) to display the specific video file,
wherein the counter (12) has an identity marker corresponding to the specific commodity, and the input device (36) is a reading device disposed on the display (14) to read the identity marker to form the signal.

2. The commodity introduction counter according to claim 1, wherein the identity marker is a light reflective marker, and the reading device is a light sensor.

3. The commodity introduction counter according to claim 1, wherein the identity marker is a bar code corresponding to the specific commodity, and the reading device is a scanner.

4. The commodity introduction counter according to claim 1, wherein the counter (12) comprises a support, and the support forms the guiding rail (22).

5. The commodity introduction counter according to claim 1, wherein the guiding rail (22) extends along a straight line or an arc line, or the guiding rail (22) is annular.

6. A commodity introduction method of a commodity introduction counter (10), wherein the commodity introduction counter (10) comprises: a display (14) disposed on a counter (12), a memorizer (34) for storing video files introducing the commodity, an input device (36) for inputting a signal of one specific commodity of commodities, a control device (38) and a moving device (16) disposed between the display (14) and the counter (12), wherein the display (14) can be moved through the moving device (16) to a position corresponding to the specific commodity, wherein the moving device (16) comprises a guiding rail (22) disposed on the counter (12) and a moving member (24) disposed on the display (14) and matched with the guiding rail (22), the moving member (24) being configured to move along the guiding rail (22),
wherein the commodity introduction method comprises the following steps:
the input device (36) inputs a signal indicating a specific commodity;
the control device (38) receives the signal, and obtains a specific video file corresponding to the specific commodity from the video files stored in the memorizer (34);
the control device (38) controls the display (14) to display the specific video file, wherein the step of inputting a signal indicating one specific commodity also comprises the substeps that the display (14) is moved to the position corresponding to the specific commodity, and
wherein the counter (12) is provided with an identity marker corresponding to the specific commodity, the input device (36) comprises a reading device disposed on the display (14), the reading device reads the identity marker to form the signal.

## Patentansprüche

1. Wareneinführungstheke (10), Folgendes umfassend:
eine Theke (12) zum Platzieren von Waren;
eine Anzeige (14), die auf der Theke (12) angeordnet ist;
eine Speichereinrichtung (34) zum Speichern von Videodateien, die die Waren einführen;
eine Eingabevorrichtung (36) zum Eingeben eines Signals, das eine bestimmte Ware in den Waren angibt;
eine Bewegungsvorrichtung (16), die zwischen der Anzeige (14) und der Theke (12) angeordnet ist, wobei die Anzeige (14) durch die Bewegungsvorrichtung (16) zu einer Position bewegt werden kann, die der bestimmten Ware entspricht, wobei die Bewegungsvorrichtung (16) eine Führungsschiene (22), die auf der Theke (12) angeordnet ist, und ein Bewegungselement (24) umfasst, das auf der Anzeige (14) angeordnet und mit der Führungsschiene (22) abgestimmt ist, wobei das Bewegungselement (24) konfiguriert ist, um sich entlang der Führungsschiene (22) zu bewegen; und
eine Steuervorrichtung (38) zum Empfangen des Signals, Erhalten der bestimmten Videodatei, die der bestimmten Ware entspricht, aus den Videodateien, die in dem Speicher (34) gespeichert sind, und Steuern der Anzeige (14), um die bestimmte Videodatei anzuzeigen,
wobei die Theke (12) eine Identitätsmarkierung aufweist, der der bestimmten Ware entspricht, und wobei die Eingabevorrichtung (36) eine Lesevorrichtung ist, die auf der Anzeige (14) angeordnet ist, um die Identitätsmarkierung zu lesen, um das Signal auszubilden.

2. Wareneinführungstheke nach Anspruch 1, wobei die Identitätsmarkierung eine lichtreflektierende Markierung ist und die Lesevorrichtung ein Lichtsensor ist.

3. Wareneinführungstheke nach Anspruch 1, wobei die Identitätsmarkierung ein Strichcode ist, der der bestimmten Ware entspricht, und die Lesevorrichtung ein Scanner ist.

4. Wareneinführungstheke nach Anspruch 1, wobei die Theke (12) eine Stütze umfasst und die Stütze die Führungsschiene (22) ausbildet.

5. Wareneinführungstheke nach Anspruch 1, wobei sich die Führungsschiene (22) entlang einer geraden Linie oder einer Bogenlinie erstreckt, oder wobei die Führungsschiene (22) ringförmig ist.

6. Wareneinführungsverfahren einer Wareneinführungstheke (10), wobei die Wareneinführungstheke (10) Folgendes umfasst:
eine Anzeige (14), die auf einer Theke (12) angeordnet ist, eine Speichereinrichtung (34) zum Speichern von Videodateien, die die Ware einführen, eine Eingabevorrichtung (36) zum Eingeben eines Signals einer bestimmten Ware von Waren, eine Steuervorrichtung (38) und eine Bewegungsvorrichtung (16), die zwischen der Anzeige (14) und der Theke (12) angeordnet ist, wobei die Anzeige (14) durch die Bewegungsvorrichtung (16) zu einer Position bewegt werden kann, die der bestimmten Ware entspricht, wobei die Bewegungsvorrichtung (16) eine Führungsschiene (22), die auf der Theke (12) angeordnet ist, und ein Bewegungselement (24) umfasst, das auf der Anzeige (14) angeordnet und mit der Führungsschiene (22) abgestimmt ist, wobei das Bewegungselement (24) konfiguriert ist, um sich entlang der Führungsschiene (22) zu bewegen,
wobei das Wareneinführungsverfahren die folgenden Schritte umfasst:
die Eingabevorrichtung (36) gibt ein Signal ein, das eine bestimmte Ware angibt;
die Steuervorrichtung (38) empfängt das Signal und erhält eine bestimmte Videodatei, die der bestimmten Ware aus den Videodateien entspricht, die in dem Speicher (34) gespeichert sind;
die Steuervorrichtung (38) steuert die Anzeige (14), um die bestimmte Videodatei anzuzeigen, wobei der Schritt des Eingebens eines Signals, das eine bestimmte Ware angibt, ebenso die Teilschritte umfasst, in denen die Anzeige (14) zu der Position bewegt wird, die der bestimmten Ware entspricht, und
wobei die Theke (12) mit einer Identitätsmarkierung versehen ist, die der bestimmten Ware entspricht, wobei die Eingabevorrichtung (36) eine Lesevorrichtung umfasst, die auf der Anzeige (14) angeordnet ist, wobei die Lesevorrichtung die Identitätsmarkierung liest, um das Signal auszubilden.

## Revendications

1. Comptoir d'introduction de produit (10) comprenant :
un comptoir (12) pour placer des produits ;
un écran (14) disposé sur le comptoir (12) ;
un mémoriseur (34) pour stocker des fichiers vidéo présentant les produits ;
un dispositif d'entrée (36) pour entrer un signal indiquant un produit spécifique dans les produits ;
un dispositif mobile (16) disposé entre l'écran (14) et le comptoir (12), l'écran (14) pouvant être déplacé à travers le dispositif mobile (16) vers une position correspondant au produit spécifique, le dispositif mobile (16) comprenant un rail de guidage (22) disposé sur le comptoir (12) et un élément mobile (24) disposé sur l'écran (14) et adapté au rail de guidage (22), l'élément mobile (24) étant conçu pour se déplacer le long du rail de guidage (22) ; et
un dispositif de commande (38) pour recevoir le signal, obtenir le fichier vidéo spécifique correspondant au produit spécifique à partir des fichiers vidéo stockés dans le mémoriseur (34), et commander l'écran (14) pour afficher le fichier vidéo spécifique, le comptoir (12) ayant un marqueur d'identité correspondant au produit spécifique, et le dispositif d'entrée (36) étant un dispositif de lecture disposé sur l'écran (14) pour lire le marqueur d'identité afin de former le signal.

2. Comptoir d'introduction de produit selon la revendication 1, dans lequel le marqueur d'identité est un marqueur réfléchissant la lumière, et le dispositif de lecture est un capteur de lumière.

3. Comptoir d'introduction de produit selon la revendication 1, dans lequel le marqueur d'identité est un code-barres correspondant au produit spécifique, et le dispositif de lecture est un scanner.

4. Comptoir d'introduction de produit selon la revendication 1, dans lequel le comptoir (12) comprend un support, et le support forme le rail de guidage (22).

5. Comptoir d'introduction de produits selon la revendication 1, dans lequel le rail de guidage (22) s'étend le long d'une ligne droite ou d'une ligne en arc, ou le rail de guidage (22) est annulaire.

6. Procédé d'introduction de produit d'un comptoir d'introduction de produit (10), dans lequel le comptoir d'introduction de produit (10) comprend : un écran (14) disposé sur un comptoir (12), un mémoriseur (34) pour stocker des fichiers vidéo introduisant le produit, un dispositif d'entrée (36) pour entrer un signal d'un produit spécifique de produits, un dispositif de commande (38) et un dispositif mobile (16) disposé entre l'écran (14) et le comptoir (12), l'écran (14) pouvant être déplacé à travers le dispositif mobile (16) vers une position correspondant au produit spécifique, le dispositif mobile (16) comprenant un rail de guidage (22) disposé sur le comptoir (12) et un élément mobile (24) disposé sur l'écran (14) et adapté au rail de guidage (22), l'élément mobile (24) étant conçu pour se déplacer le long du rail de guidage (22), le procédé d'introduction de produits comprenant les étapes suivantes :
le dispositif d'entrée (36) entre un signal indiquant un produit spécifique ;
le dispositif de commande (38) reçoit le signal et obtient un fichier vidéo spécifique correspondant au produit spécifique à partir des fichiers vidéo stockés dans le mémoriseur (34) ;
le dispositif de commande (38) commande l'écran (14) pour afficher le fichier vidéo spécifique, l'étape d'entrée d'un signal indiquant un produit spécifique comprend également les sous-étapes selon lesquelles l'écran (14) est déplacé vers la position correspondant au produit spécifique et
le comptoir (12) étant pourvu d'un marqueur d'identité correspondant au produit spécifique, le dispositif d'entrée (36) comprend un dispositif de lecture disposé sur l'écran (14), le dispositif de lecture lit le marqueur d'identité pour former le signal.
